# FASCICULE DE BREVET EUROPEEN

(11) **EP 2 306 630 B1**
(45) Date de publication et mention de la délivrance du brevet: **18.09.2013**
(21) Numéro de dépôt: 10174868.9
(22) Date de dépôt: 01.09.2010
(51) Int. Cl.: H02P 3/04, H02P 3/16, H02P 3/26, H02P 29/00, H02P 29/04, G01L 5/28

(54) **Procédé pour vérifier l'état d'un frein d'un mécanisme commandé par un convertisseur de fréquence ou autre contrôleur**
Überprüfungsverfahren des Zustands einer Bremse eines über einen Frequenzwandler oder einen anderen Controller gesteuerten Mechanismus
Method for checking the condition of a brake of a mechanism controlled by a frequency converter or another converter

(30) Priorité: 03.09.2009 FR 0956002
(43) Date de publication de la demande: 06.04.2011
(73) Titulaire: Manitowoc Crane Group France, 69130 Ecully (FR)
(72) Inventeur: Mathe, Denis, 03470, SALIGNY SUR ROUDON (FR)
(74) Mandataire: Chevalier, Renaud Philippe

(56) Documents cités:
- EP-A1- 1 094 594
- DE-A1-102007 046 617
- US-A- 5 343 134
- US-A- 5 818 185

## Description

La présente invention concerne un procédé destiné à la vérification de l'état, bloqué ou débloqué, d'un frein appartenant à un mécanisme commandé par un convertisseur de fréquence ou autre contrôleur analogue associé à un moteur électrique. Cette invention s'intéresse plus particulièrement à un procédé pour vérifier l'état d'un frein d'un tel mécanisme appartenant à un appareil de levage, tel qu'une grue à tour.

Une grue à tour est habituellement équipée, pour la commande de ses différents mouvements, de moteurs électriques qui, depuis quelques années, sont pilotés par des convertisseurs de fréquence ou autres contrôleurs ou modules électroniques de pilotage ; ceux-ci permettant d'obtenir une variation continue de la vitesse d'un mécanisme tel qu'un treuil - voir par exemple les documents EP 1 094 594 et FR 2 858 490. Les moteurs électriques, ou les mécanismes commandés par ces moteurs, sont ici équipés de freins électromécaniques ou hydrauliques. Lorsque l'on commande le démarrage d'un moteur pour amorcer un mouvement de la grue, il faut en même temps commander la libération du frein appartenant au moteur concerné ou associé à celui-ci. A l'inverse, lorsque l'on commande l'arrêt du moteur pour interrompre le mouvement commandé par ce moteur, il faut simultanément commander la fermeture du frein correspondant.

S'il existe un défaut dans la commande du frein considéré, ou dans le frein lui-même, le frein risque de ne pas s'ouvrir ou de ne pas se fermer normalement, et les conséquences d'une telle situation peuvent être catastrophiques pour la grue et pour son environnement. C'est pourquoi il convient de vérifier que toute commande de freinage ou de défreinage a bien été effectuée.

Pour les freins généralement électromécaniques qui sont montés sur les moteurs eux-mêmes, qui constituent ainsi chacun un « moteur-frein », on utilise habituellement un capteur placé sur le frein lui-même, lequel capteur détecte directement ou indirectement et transmet l'état ouvert ou fermé du frein. Un exemple de cet état de la technique est donné par le document US 5343134. On peut aussi mentionner le document DE 10 2007 046617 dans lequel un capteur de température est utilisé pour indiquer l'état d'un frein associé à un moteur électrique, les inconvénients de cette solution étant qu'il n'existe pas un lien obligatoire entre l'échauffement du frein et la défaillance de ce frein, et que l'échauffement est lent en raison de l'inertie thermique de sorte qu'un état anormal du frein est détecté avec un retard important.

Dans le cas où le frein n'est pas placé sur le moteur, mais se situe à un autre emplacement et en particulier sur le mécanisme tel que le treuil commandé par ce moteur (le frein étant par exemple situé sur l'arbre rapide, l'arbre lent ou le tambour du treuil), il n'est pas toujours possible d'avoir un capteur qui indique de manière fiable l'état du frein. Cette difficulté est surtout rencontrée avec des freins composés de plusieurs pinces, qui sont difficiles à surveiller individuellement.

Dans le cas des freins hydrauliques, une solution connue consiste à tester, à l'aide d'un pressostat placé dans le circuit hydraulique de commande du frein, que la pince du frein a pris sa position ouverte ou fermée. Cependant, il existe toujours un risque de mauvais fonctionnement ou de non fonctionnement du pressostat, ou de défaillance de l'une des pinces (dans le cas d'un frein à plusieurs pinces), l'une des pinces ne s'ouvrant plus sans que cela soit détectable à l'aide du pressostat.

La présente invention vise à éliminer les inconvénients précédemment exposés, et elle a donc pour but de vérifier, avec une bonne fiabilité et de manière rapide, et sans ajout de composants supplémentaires tels que capteur ou pressostat, que le frein associé à un moteur électrique ou à un mécanisme commandé par un tel moteur est en état de fonctionnement, et en particulier que la commande de déblocage du frein a bien libéré ce frein, de sorte que le moteur et/ou le mécanisme associé, par exemple un treuil, tourne normalement, ceci en mettant à profit les possibilités offertes par les convertisseurs de fréquence et autres contrôleurs analogues.

A cet effet, l'invention a pour objet un procédé pour vérifier l'état d'un frein d'un mécanisme commandé par un convertisseur de fréquence ou autre contrôleur pilotant un moteur électrique de ce mécanisme, le procédé consistant , au démarrage ou à l'arrêt du moteur, à contrôler le couple fourni par le convertisseur de fréquence ou autre contrôleur et, après écoulement d'un temps prédéfini correspondant à un temps nécessaire pour l'ouverture ou la fermeture du frein, à comparer le couple fourni avec une valeur de couple minimale ou maximale prédéterminée en fonction du mécanisme, le résultat de la comparaison indiquant un état du frein

Ainsi, le procédé de l'invention utilise les possibilités des convertisseurs de fréquence et autres contrôleurs analogues qui délivrent des informations sur les mécanismes qu'ils pilotent et notamment le couple fourni par le moteur, pour détecter l'état du frein, ceci sans ajout de pièces additionnelles, par une vérification simple effectuée après un temps choisi de telle sorte qu'il corresponde au temps normalement nécessaire pour l'ouverture de la pince ou des pinces du frein, ou pour la fermeture de la pince ou des pinces du même frein.

Selon le type de mouvement commandé par le mécanisme considéré, le procédé de l'invention peut être mis en oeuvre de diverses manières.

Dans un premier mode de mise en oeuvre, applicable à un mécanisme commandant un mouvement horizontal, après le démarrage du moteur et quel que soit le sens de rotation de ce moteur, et après écoulement du temps choisi correspondant au temps normalement nécessaire pour l'ouverture du frein, on compare le couple fourni avec la même valeur de couple maximale pour les deux sens de rotation du moteur et, si le couple est supérieur ou éventuellement égal à cette valeur maximale, on constate un état « non ouvert » du frein et on arrête automatiquement le moteur.

Comme on le comprend, la force de gravité n'intervenant pas dans le cas d'un mouvement purement horizontal, tel que le mouvement d'orientation de la flèche d'une grue à tour ou le mouvement de translation du chariot d'une telle grue, la surveillance se fait ici de la même façon pour les deux sens de rotation du moteur.

Dans un autre mode de mise en oeuvre, applicable à un mécanisme commandant un mouvement vertical, ou un mouvement comportant une composante verticale, après le démarrage du moteur et après écoulement du temps choisi correspondant au temps normalement nécessaire pour l'ouverture du frein, on compare le couple fourni :
- avec une valeur de couple maximale dans le cas d'une commande d'un mouvement de montée et, si le couple est supérieur ou éventuellement égal à cette valeur maximale, on constate un état « non ouvert » du frein et on arrête automatiquement le moteur,
- avec une valeur de couple minimale dans le cas d'une commande d'un mouvement de descente et, si le couple est inférieur ou éventuellement égal à cette valeur de couple minimale, on constate un état « non ouvert » du frein et on arrête automatiquement le moteur.

A l'inverse, si le couple se situe dans l'intervalle entre la valeur maximale et la valeur minimale précédemment mentionnées, valeurs qui sont adaptées à chaque mécanisme, on constate un état normalement « ouvert » du frein et on laisse tourner le moteur pour commander, selon le cas, un mouvement de montée ou un mouvement de descente, par exemple pour un treuil de levage de la charge ou pour un treuil de relevage de la flèche d'une grue, un exemple plus particulier étant l'abaissement de la flèche de la grue à l'aide du treuil de relevage.

Comme on le comprend, notamment dans le cas de la commande d'un mouvement de descente, le procédé de l'invention permet aussi de détecter un blocage provoqué non pas par une défaillance du frein ou de la commande, mais résultant d'une cause autre, telle que le coincement d'un câble ou de l'organe commandé lui-même, par exemple la flèche d'une grue dans le cas d'un mécanisme à treuil de relevage, servant à lever ou abaisser la flèche.

L'invention sera mieux comprise à l'aide de la description qui suit, en référence au dessin schématique annexé illustrant, à titre d'exemples, quelques modes de mise en oeuvre de ce procédé pour vérifier l'état d'un frein d'un mécanisme commandé par un convertisseur de fréquence ou autre contrôleur.
La figure 1 représente, très schématiquement, une grue à tour à flèche distributrice appliquant le procédé de la présente invention.
La figure 2 est un organigramme simplifié illustrant le procédé de l'invention.
La figure 3 représente, très schématiquement, une grue à tour à flèche relevable appliquant ce procédé.

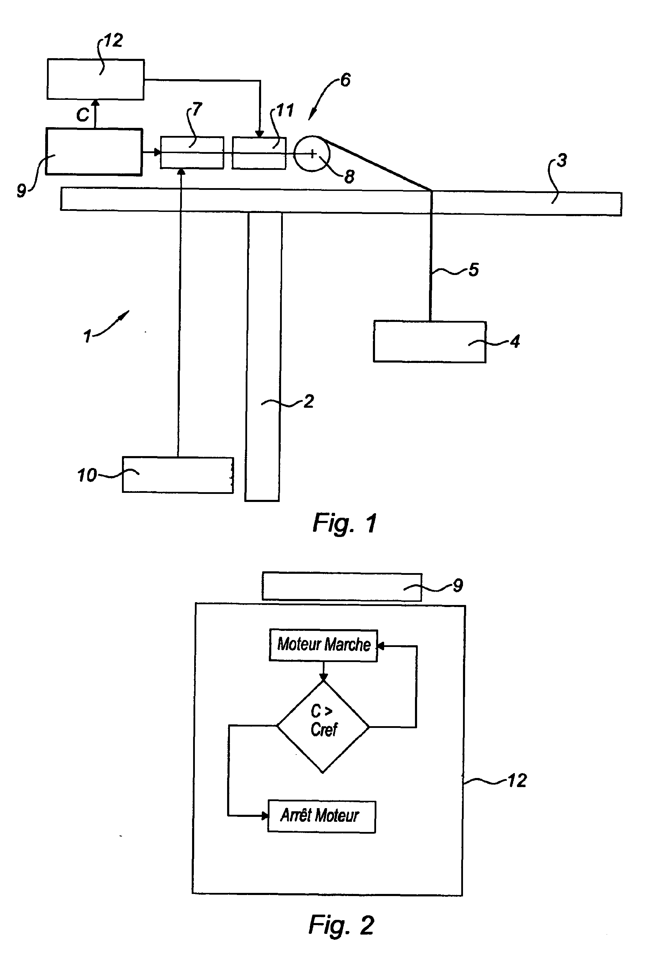

La figure 1 représente, très schématiquement, une grue à tour désignée dans son ensemble par la référence 1, la grue 1 comprenant un mât 2 et une flèche distributrice 3 le long de laquelle se déplace un chariot, sous lequel la charge à soulever 4 est suspendue à un câble de levage 5 par l'intermédiaire d'une moufle et d'un crochet (non représentés).

La grue 1 comprend un treuil de levage 6, essentiellement composé d'un moteur électrique 7, d'un réducteur et d'un tambour 8 autour duquel est enroulé le câble de levage 5 ; le moteur électrique 7 entraîne en rotation le tambour 8 dans un sens ou dans l'autre, par l'intermédiaire du réducteur, pour enrouler ou dérouler le câble de levage 5, donc pour lever ou abaisser la charge 4.

Le moteur électrique 7 du treuil de levage 6 est piloté par un convertisseur de fréquence 9, à fonction de variateur de vitesse. Ce moteur 7 est lui-même alimenté en énergie électrique par une alimentation électrique 10, laquelle est notamment constituée par un réseau de distribution électrique.

Le treuil de levage 6 comprend encore un frein 11, associé au moteur électrique 7. La fermeture du frein 11 immobilise en rotation le moteur 7 et le tambour 8, tandis que l'ouverture de ce frein 11 autorise la libre rotation du moteur 7 et du tambour 8. Normalement, la mise en marche du moteur électrique 7 s'accompagne d'une ouverture du frein, tandis que la mise à l'arrêt de ce moteur 7 s'accompagne de la fermeture du frein 11.

Au convertisseur de fréquence 9 est associée une fonction 12 de contrôle de couple, visant à vérifier l'état fermé ou ouvert du frein 11. La figure 2 détaille cette fonction 12, laquelle intervient de la manière suivante :
Au démarrage ou à la mise à l'arrêt du moteur électrique 7, la couple C fourni par le convertisseur de fréquence 9 est comparé avec une valeur de couple de référence Cref, qui est notamment une valeur de couple maximale admise. Plus particulièrement, au démarrage c'est-à-dire en début de levage d'une charge 4, si le couple C reste inférieur à la valeur Cref, le frein 11 est considéré comme normalement ouvert et le moteur électrique 7 est maintenu en marche. A l'inverse, si le couple C est supérieur à la valeur Cref, le frein 11 est très probablement resté fermé et, pour tenir compte de cet état bloqué du frein 11, le moteur électrique 7 est mis et maintenu à l'arrêt.

La comparaison du couple C avec la valeur de référence Cref est effectuée, après commande de démarrage du moteur électrique 7, après un temps To prédéterminé qui correspond au temps normalement nécessaire pour l'ouverture du frein 11. Il en est de même lors de la mise à l'arrêt du moteur 7, en considérant le temps normalement nécessaire à la fermeture du frein 11.

Dans l'exemple d'application illustré aux figures 1 et 2 du dessin, qui correspond à la commande d'un mouvement vertical (levage ou abaissement d'une charge 4), la valeur de référence du couple est distincte, selon qu'il s'agisse de la commande d'un mouvement de montée ou d'un mouvement de descente, autrement dit selon le sens de rotation du moteur 7. Par contre, dans le cas de la commande d'un mouvement horizontal, tel que le mouvement d'orientation de la flèche 3 ou le mouvement de translation du chariot le long de la flèche 3, la valeur de référence peut être la même pour les deux sens de rotation du moteur 7.

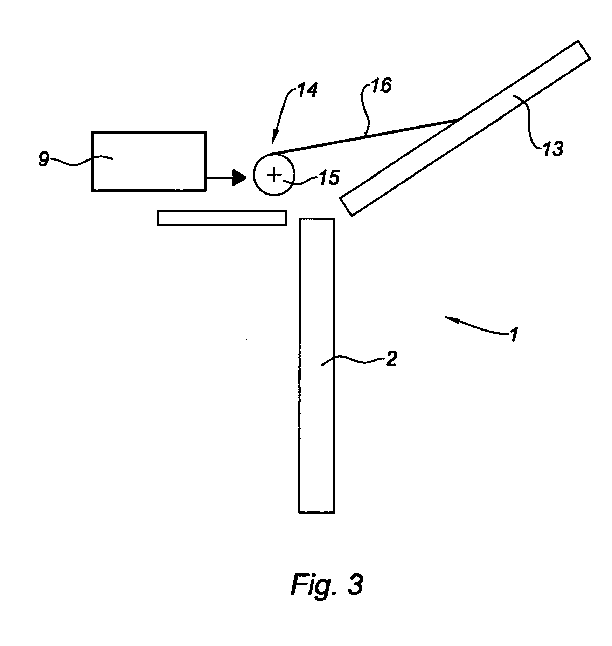

La figure 3 montre, dans une représentation très schématique, une autre grue à tour 1 qui est une grue à flèche relevable 13. Le mécanisme considéré est ici un treuil de relevage 14, dont le moteur électrique est piloté par un convertisseur de fréquence 9, le treuil de relevage 14 comprenant un tambour 15 autour duquel est enroulé un câble de relevage 16 auquel est suspendue la flèche 13, cette dernière étant montée pivotante autour d'un axe horizontal au sommet du mât 2 de la grue 1.

Dans ce contexte, le procédé de l'invention permet de vérifier l'état du frein incorporé au treuil de relevage 14, selon le processus décrit plus haut.

De plus, si la flèche 13 ne s'abaisse pas lorsqu'on commande le treuil 14 dans le sens d'un mouvement de descente, en raison du coincement du câble de relevage 16 ou de la flèche 13 elle-même, le câble de relevage 16 peut se dérouler avec du « mou » et, si le coincement cesse, la flèche 13 s'abaisse soudainement, en tendant brusquement le câble 16 ; sous le choc ainsi créé, il existe alors un risque de rupture du câble 16 ou de chute de la grue 1 elle-même.

Pour remédier à cet inconvénient dont les conséquences peuvent être particulièrement graves, on prévoit que lors d'une phase d'abaissement de la flèche 13, le couple C fourni par le convertisseur de fréquence 9 pilotant le treuil de relevage 14 est mesuré, et après un temps To on vérifie que ce couple C est non nul et, notamment, se trouve supérieur à une valeur de référence Cref adaptée au mécanisme concerné. Si cette condition n'est pas réalisée, on arrête le moteur du treuil de relevage 14.

De façon plus générale, le même procédé peut être utilisé pour la détection d'un « mou » de câble, sur un treuil quelconque (levage, relevage,...).

On ne s'éloignerait pas du cadre de l'invention, telle que définie dans les revendications, en appliquant le procédé à des mécanismes de tous genres, avec freins de tous types situés en tout emplacement approprié, ces mécanismes pouvant être commandés non seulement par des convertisseurs de fréquence, mais aussi par d'autres contrôleurs de moteurs ou plus généralement par tous modules électriques de pilotage de moteurs, lesquels peuvent fournir les mêmes types de données exploitables. Dans le même ordre d'idées, le procédé de l'invention est applicable à des appareils de levage autres que les grues à tour, par exemple sur des grues mobiles ou des ponts roulants.

## Revendications

1. Procédé pour vérifier l'état d'un frein (11) d'un mécanisme (6) commandé par un convertisseur de fréquence (9) ou autre contrôleur pilotant un moteur électrique (7) de ce mécanisme (6), **caractérisé en ce qu'**il consiste, au démarrage ou à l'arrêt du moteur (7), à contrôler le couple ( C ) fourni par le convertisseur de fréquence (9) ou autre contrôleur et, après écoulement d'un temps prédéfini (To) correspondant à un temps nécessaire pour l'ouverture ou la fermeture du frein (11), à comparer le couple ( C ) fourni avec une valeur de couple maximale ou minimale (Cref) prédéterminée en fonction du mécanisme (6), le résultat de la comparaison indiquant un état du frein (11).

2. Procédé selon la revendication 1, applicable à un mécanisme (6) commandant un mouvement horizontal, **caractérisé en ce que**, après le démarrage du moteur (7) et quel que soit le sens de rotation de ce moteur, et après écoulement du temps (To) choisi correspondant au temps normalement nécessaire pour l'ouverture du frein (11), on compare le couple ( C ) fourni avec la même valeur de couple maximale (Cref) pour les deux sens de rotation du moteur et, si le couple ( C ) est supérieur ou éventuellement égal à cette valeur maximale (Cref), on constate un état « non ouvert » du frein (11) et on arrête automatiquement le moteur (7).

3. Procédé selon la revendication 1, applicable à un mécanisme (6) commandant un mouvement vertical, ou un mouvement comportant une composante verticale, **caractérisé en ce que**, après le démarrage du moteur (7) et après écoulement du temps (To) choisi correspondant au temps normalement nécessaire pour l'ouverture du frein (11), on compare le couple (C) fourni :
- avec une valeur de couple maximale dans le cas d'une commande d'un mouvement de montée et, si le couple ( C ) est supérieur ou éventuellement égal à cette valeur maximale, on constate un état « non ouvert » du frein (11) et on arrête automatiquement le moteur (7),
- avec une valeur de couple minimale dans le cas d'une commande d'un mouvement de descente et, si le couple (C) est inférieur ou éventuellement égal à cette valeur de couple minimale, on constate un état « non ouvert » du frein (11) et on arrête automatiquement le moteur (7).

4. Procédé selon l'une des revendications 1 à 3, **caractérisé par** son application à la vérification de l'état d'un frein (11) d'un mécanisme (6) appartenant à un appareil de levage, tel qu'une grue à tour (1).

5. Procédé selon l'ensemble des revendications 3 et 4, **caractérisé en ce que**, dans le cas d'un mouvement de descente, ce procédé est aussi prévu pour détecter blocage provoqué non pas par une défaillance du frein (11) ou de la commande, mais résultant d'une cause autre, telle que le coincement d'un câble (16) ou de l'organe commandé lui-même, tel que la flèche (13) d'une grue dans le cas d'un mécanisme à treuil de relevage (14), servant à lever ou abaisser la flèche (13).

## Patentansprüche

1. Verfahren zur Überprüfung des Zustandes einer Bremse (11) eines Mechanismus (6), der von einem Frequenzwandler (9) oder einem anderen Controller, der einen Elektromotor (7) dieses Mechanismus (6) steuert, gesteuert wird, **dadurch gekennzeichnet, dass** es darin besteht, beim Starten oder Anhalten des Motors (7) das Moment (C) zu kontrollieren, das von dem Frequenzwandler (9) oder anderen Controller geliefert wird, und nach Ablauf einer vordefinierten Zeit (To), entsprechend einer für das Öffnen oder Schließen der Bremse (11) notwendigen Zeit, das gelieferte Moment (C) mit einem maximalen oder minimalen Moment (Cref), das in Abhängigkeit vom Mechanismus (6) vordefiniert ist, zu vergleichen, wobei das Ergebnis des Vergleichs den Zustand der Bremse (11) anzeigt.

2. Verfahren nach Anspruch 1, anwendbar für einen Mechanismus (6), der eine horizontale Bewegung steuert, **dadurch gekennzeichnet, dass** nach dem Starten des Motors (7) und unabhängig von der Drehrichtung dieses Motors und nach Ablauf der Zeit (To), die entsprechend der Zeit gewählt wird, die normalerweise für das Öffnen der Bremse (11) notwendig ist, das gelieferte Moment (C) mit demselben maximalen Momentwert (Cref) für die beiden Drehrichtungen des Motors verglichen wird, und wenn das Moment (C) größer oder eventuell gleich diesem Maximalwert (Cref) ist, ein "nicht offener" Zustand der Bremse (11) festgestellt und der Motor (7) automatisch angehalten wird.

3. Verfahren nach Anspruch 1, anwendbar für einen Mechanismus (6), der eine vertikale Bewegung oder eine Bewegung umfassend eine vertikale Komponente, steuert, **dadurch gekennzeichnet, dass** nach dem Starten des Motors (7) und nach Ablauf der Zeit (To), die entsprechend der Zeit gewählt wird, die normalerweise für das Öffnen der Bremse (11) notwendig ist, das gelieferte Moment (C) verglichen wird:
- mit einem maximalen Momentwert im Falle einer Steuerung einer aufsteigenden Bewegung, und wenn das Moment (C) größer oder eventuell gleich diesem Maximalwert ist, ein "nicht offener" Zustand der Bremse (11) festgestellt und der Motor (7) automatisch angehalten wird,
- mit einem minimalen Momentwert im Falle einer Steuerung einer absteigenden Bewegung, und wenn das Moment (C) kleiner oder eventuell gleich diesem minimalen Momentwert ist, ein "nicht offener" Zustand der Bremse (11) festgestellt und der Motor (7) automatisch angehalten wird.

4. Verfahren nach einem der Ansprüche 1 bis 3, **gekennzeichnet durch** seine Anwendung für die Überprüfung des Zustandes einer Bremse (11) eines Mechanismus (6), der einem Hubgerät, wie einem Drehkran (1), angehört.

5. Verfahren nach der Gesamtheit der Ansprüche 3 und 4, **dadurch gekennzeichnet, dass** im Falle einer absteigenden Bewegung dieses Verfahren auch dazu vorgesehen ist, eine Blockierung zu erfassen, die nicht durch eine Fehlfunktion der Bremse (11) oder der Steuerung hervorgerufen wird, sondern durch eine andere Ursache, wie beispielsweise das Verklemmen eines Kabels (16) oder des Steuerelements selbst, wie der Ausleger (13) eines Krans im Falle eines Mechanismus mit Hubwinde (14), der dazu dient, den Ausleger (13) zu heben oder zu senken.

## Claims

1. Method for checking the condition of a brake (11) of a mechanism (6) controlled by a frequency converter (9) or other controller driving an electric motor (7) of this mechanism (6), **characterized in that** it consists, at the starting or the stopping of the motor (7), in checking the torque (C) supplied by the frequency converter (9) or other controller and, after the elapse of a predefined time (To) corresponding to a time necessary for the opening or the closing of the brake (11), in comparing the supplied torque (C) with a predetermined maximum or minimum torque value (Cref) as a function of the mechanism (6), the result of the comparison indicating a condition of the brake (11).

2. Method according to Claim 1, applicable to a mechanism (6) controlling a horizontal movement, **characterized in that**, after the starting of the motor (7) and irrespective of the direction of rotation of this motor, and after the elapse of the chosen time (To) corresponding to the time normally necessary for the opening of the brake (11), the supplied torque (C) is compared with the same value of maximum torque (Cref) for the two directions of rotation of the motor and, if the torque (C) is greater than or optionally equal to this maximum value (Cref), a "not open" condition of the brake (11) is noted and the motor (7) is automatically stopped.

3. Method according to Claim 1, applicable to a mechanism (6) controlling a vertical movement, or a movement comprising a vertical component, **characterized in that**, after the starting of the motor (7) and after the elapse of the chosen time (To) corresponding to the time normally necessary for the opening of the brake (11), the supplied torque (C) is compared:
- with a maximum torque value in the case of a control of a rising movement and, if the torque (C) is greater than or optionally equal to this maximum value, a "not open" condition of the brake (11) is noted and the motor (7) is automatically stopped,
- with a minimum torque value in the case of a control of a descending movement and, if the torque (C) is below or optionally equal to this minimum torque value, a "not open" condition of the brake (11) is noted and the motor (7) is automatically stopped.

4. Method according to one of Claims 1 to 3, **characterized by** its application to the checking of the condition of a brake (11) of a mechanism (6) belonging to a lifting apparatus, such as a tower crane (1).

5. Method according to the combination of Claims 3 and 4, **characterized in that**, in the case of a movement of descent, this method is also designed to detect immobilization caused not by a failure of the brake (11) or of the control, but resulting from another cause, such as the jamming of a cable (16) or of the controlled member itself, such as the jib (13) of a crane in the case of a lifting winch mechanism (14) used to raise or lower the jib (13).
